# EUROPÄISCHE PATENTSCHRIFT

(11) **EP 1 780 395 B1**
(45) Veröffentlichungstag und Bekanntmachung des Hinweises auf die Patenterteilung: **03.12.2008**
(21) Anmeldenummer: 06021226.3
(22) Anmeldetag: 10.10.2006
(51) Int. Cl.: F02K 9/52

(54) **Einspritzelement insbesondere für einen Raketenantrieb**
Injector in particular for a rocket engine
Injecteur en particulier pour un moteur de fusée

(30) Priorität: 14.10.2005 DE 102005049686
(43) Veröffentlichungstag der Anmeldung: 02.05.2007
(73) Patentinhaber: Astrium GmbH, 81663 München (DE)
(72) Erfinder: Hagemann, Gerald, Dr., 85586 Poing (DE); Mädig, Chris Udo, 85716 Unterschleißheim (DE)
(74) Vertreter: Hummel, Adam

(56) Entgegenhaltungen:
- EP-A- 0 924 424
- US-A1- 3 136 123
- US-A1- 3 611 722
- US-A1- 4 801 092

## Beschreibung

Die Erfindung betrifft ein Einspritzelement, insbesondere für einen Raketenantrieb, gemäß dem Oberbegriff des Patentanspruches 1.

Einspritzelemente in einem Raketenantrieb dienen der Gemischaufbereitung und der Gewährleistung einer optimalen Verbrennung in dem Brennraum des Raketenantriebs. Die Hauptaufgabe der Einspritzelemente liegt in der optimalen Gemischaufbereitung zur Erzielung eines höchstmöglichen Verbrennungswirkungsgrades. Dies wird in erster Linie durch eine möglichst feine Zerstäubung des Treibstoffes erreicht. Hierbei spielt die Anzahl der Einspritzelemente in dem Raketenantrieb eine entscheidende Rolle.

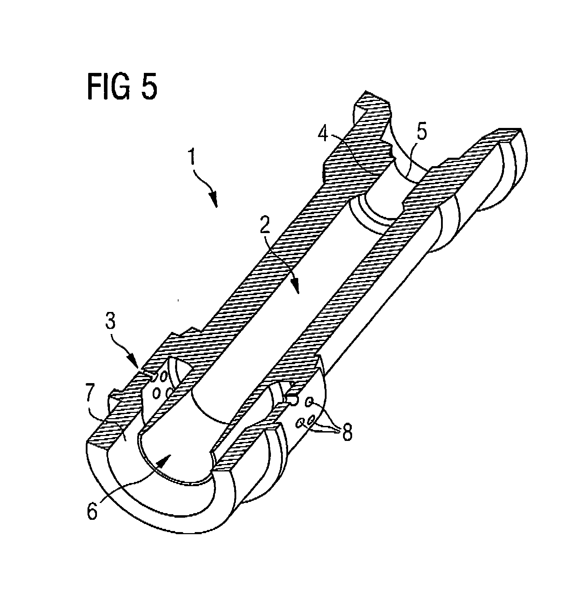

Im Bereich so genannter kryogener Triebwerke (LOX-LH2) werden hierfür koaxiale Einspritzelemente verwendet. Ein aus dem Stand der Technik bekanntes Einspritzelement 1 ist exemplarisch in Fig.5 dargestellt. Die Einspritzung des flüssigen Sauerstoffs in die Brennkammer erfolgt über eine Auslassöffnung 6 des inneren Elements 2, das auch als "LOX-Post" bezeichnet wird, während der Wasserstoff über einen das innere Element 2 umgebenden, Ringspalt 7, das koaxial angeordnete äußere Element 3, zugeführt wird.

Durch das Vorsehen einer dem inneren Element 2 zugeordneten Blende 4 erfolgt die Entkopplung zwischen einem Fördersystem der Treibstoffkomponente Sauerstoff und der Brennkammer. Die Entkopplung zwischen dem Fördersystem des Wasserstoffs und der Brennkammer wird durch Elementeintrittsbohrungen 8 an dem äußeren Element 3 übernommen, welche auch gleichzeitig eine Filterfunktion innehaben.

Die Gemischaufbereitung und somit auch der Ausbrenngrad des Treibstoffes wird in entscheidendem Maße vom Impulsverhältnis als auch von der Größe der Kontaktoberfläche der Treibstoffkomponenten und damit wiederum von der Anzahl der Einspritzelemente bestimmt. Raketentriebwerke weisen deshalb eine große Anzahl derartiger Einspritzelemente auf.

Zur Schaffung eines kostengünstigeren Raketentriebwerks wäre es jedoch günstig, die Anzahl der Einspritzelemente reduzieren zu können, wobei gleichzeitig das Niveau des Ausbrenngrades beibehalten werden kann.

Durch die Verwendung von Drallelementen oder die starke Deformation der ersten Auslassöffnung des inneren Elements ergibt sich eine verstärkte Interaktion zwischen den Treibstoffkomponenten. Als weitere Möglichkeit ist die Verwendung von so genannten Tri-Koaxial-Einspritzelementen bekannt, bei denen die Durchmischung der Treibstoffkomponenten auf der Vergrößerung der Interaktionsoberfläche zwischen den Treibstoffkomponenten beruht. Die Verwendung derartiger Einspritzelemente ermöglichen zwar die Anzahl der Einspritzelemente in einem Raketentriebwerk zu verringern, führt jedoch andererseits aufgrund der aufwendigeren Konstruktionen der Einspritzelemente zu höheren Gesamtkosten des Raketentriebwerks.

Ein Einspritzelement für einen Raketenantrieb ist aus der US 3,611,722 bekannt Dieses umfasst ein inneres Element mit einer ersten Auslassöffnung zum Einspritzen von Treibstoff in einen Brennraum, welches von einem koaxial dazu angeordneten äußeren Element mit mindestens einer zur ersten Auslassöffnung koaxial angeordneten zweiten Auslassöffnung zum Einspritzen von Treibstoff in den Brennraum umgeben ist. Dabei ist die erste Auslassöffnung des inneren Elements mit einer Einrichtung zur Aufspaltung einer Treibstoffkomponente in mehrere Medienströme versehen. Die Einrichtung zur Aufspaltung des durch die erste Auslassöffnung strömenden Mediums ist durch eine die erste Auslassöffnung verschließende Platte gebildet, welche eine zentral angeordnete Öffnung aufweist, die von einer Mehrzahl an weiteren Bohrungen in der Platte umgeben ist, welche auf zumindest einer konzentrisch zu der zentral angeordneten Kreislinie liegen.

Es ist daher Aufgabe der vorliegenden Erfindung, ein Einspritzelement, insbesondere für einen Raketenantrieb, anzugeben, welches bei einfachen konstruktiven Aufbau und damit günstigen Herstellungskosten eine optimierte Durchmischung der Treibstoffkomponenten bewirkt und damit ein hohes Niveau des Ausbrenngrades bereitstellt.

Diese Aufgabe wird durch ein Einspritzelement mit den Merkmalen des Patentanspruches 1 gelöst. Bevorzugte Ausgestaltungen der Erfindung ergeben sich aus den abhängigen Patentansprüchen.

Der Erfindung liegt die Erkenntnis zugrunde, dass eine besonders intensive Durchmischung der Treibstoffkomponenten durch eine Vergrößerung der Kontaktoberfläche der miteinander zu vermischenden Treibstoffkomponenten erzielt werden kann.

Das erfindungsgemäße Einspritzelement zeichnet sich deshalb dadurch aus, dass die erste Auslassöffnung des inneren Elements mit einer Einrichtung zur Aufspaltung einer Treibstoffkomponente in zumindest zwei Medienströme versehen ist. Durch die Aufspaltung des durch die erste Auslassöffnung des inneren Elements ausströmenden Treibstoffkomponente kann die gewünschte Vergrößerung der Kontaktoberfläche auf einfache Weise realisiert werden. Die dadurch erzielte intensive Mischung der Treibstoffkomponenten bewirkt das gewünschte hohe Niveau des Ausbrenngrades.

Die Einrichtung zur Aufspaltung des durch die erste Auslassöffnung strömenden Mediums ist durch eine die erste Auslassöffnung verschließende Platte mit zumindest zwei Bohrungen gebildet. Der Begriff der Bohrung soll hierbei keine Aussage hinsichtlich dessen Gestalt beinhalten. Die Bohrung kann beispielsweise kreisrund sein, jedoch auch eine beliebige andere Querschnittsform aufweisen. Durch das Vorsehen der die erste Auslassöffnung verschließenden Platte mit zumindest zwei Bohrungen wird die zwangsweise Aufspaltung des durch die erste Auslassöffnung strömenden Mediums bewirkt. Durch diese Aufspaltung in eine der Anzahl der Bohrungen entsprechende Anzahl an Strahlen erfolgt die Vergrößerung der Gesamtoberfläche des Mediums und somit eine Zunahme der Kontaktoberfläche der zu mischenden Treibstoffkomponenten.

Die Platte weist ferner eine zentral angeordnete Bohrung auf, die von einer Mehrzahl an weiteren Bohrungen in der Platte umgeben ist, welche auf zumindest einer konzentrisch zu der zentral angeordneten Bohrung vorgesehenen Kreislinie liegen.

Wenn die Achsen, wie dies erfindungsgemäß vorgesehen ist, zumindest mancher der weiteren Bohrungen in Umfangsrichtung geneigt angeordnet sind, lässt sich ein gewisser Drall erzeugen, wodurch eine weitere Verbesserung der Durchmischung erzielt wird. Der Neigungswinkel in Umfangsrichtung kann dabei unterschiedlich von dem Neigungswinkel in bezug auf die Achse des inneren Elements ausgebildet sein. Das Maß der Neigung nach außen und/oder in Umfangsrichtung ist eine Optimierungsfrage, die durch einen Fachmann mit Hilfe von Simulationen oder Versuchen gelöst werden kann.

In einer weiteren Ausführungsform sind die Achsen zumindest mancher der weiteren Bohrungen in bezug auf die Achse des inneren Elements geneigt. In einer weiteren Ausführungsform ist vorgesehen, dass die Achsen zumindest mancher der weiteren Bohrungen in bezug auf die Achse des inneren Elements in Strömungsrichtung des Mediums nach außen geneigt sind. Die Wahl der Anzahl, der Größe und der Anordnung der weiteren Bohrungen in der die erste Auslassöffnung verschließenden Platte sowie die Wahl des Winkels der Achse zumindest mancher der weiteren Bohrungen in bezug auf die Achse des inneren Elements können im Rahmen von Optimierungsprozessen gewählt werden. Als zu optimierender Parameter ist hierbei u.a. die Durchmischung der Treibstoffkomponenten zu berücksichtigen.

In einer weiteren Ausführungsform sind die Mehrzahl an weiteren Bohrungen auf zumindest einer konzentrisch zu der zentralen Bohrung liegenden Kreislinie angeordnet. Dabei kann es zweckmäßig sein, wenn die Achsen der weiteren Bohrungen auf einer gemeinsamen Kreislinie in bezug auf die Achse des inneren Elements den gleichen Winkel aufweisen.

Eine weitere zweckmäßige Ausgestaltung sieht vor, dass die Achsen der weiteren Bohrungen auf unterschiedlichen Kreislinien in bezug auf die Achse des inneren Elements einen unterschiedlichen Winkel aufweisen. Dabei ist es besonders vorteilhaft, wenn der Winkel der Achsen der weiteren Bohrungen in bezug auf die Achse des inneren Elements mit zunehmendem Radius der Kreislinien zunimmt. Der maximale Winkel sollte insbesondere für die weiteren Bohrungen auf der Kreislinie mit dem größten Radius, das heißt im wandnahen Bereich, derart gewählt werden, dass starke Mischungsverhältnisschwankungen vermieden sind. Dies wäre dann gegeben, wenn die durch die weiteren Bohrungen ausgestoßenen Mediumstrahlen die andere Treibstoffkomponente durchschlagen.

Eine weitere Ausgestaltung sieht vor, dass das innere Element an dem der Einrichtung zur Aufspaltung des durch die erste Auslassöffnung strömenden Mediums zugewandten Ende kegelstumpfförmig ausgebildet ist. Dabei erweitert sich das innere Element bevorzugt in Richtung der ersten Auslassöffnung.

Die Erfindung betrifft ferner die Verwendung eines Einspritzelementes in einem Raketentriebwerk, das einen Brennraum aufweist. Das Raketentriebwerk zeichnet sich dadurch aus, dass es mindestens ein Einspritzelement gemäß der findung umfasst.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen. Es zeigen:
- Fig. 1: ein Ausführungsbeispiel eines erfindungsgemäßen Einspritzelements in einer geschnittenen perspektivischen Darstellung,
- Fig. 2: das in Fig.1 gezeigte Einspritzelement, wobei die Aufspaltung in mehrere Medienströme ersichtlich ist,
- Fig. 3: eine vergrößerte perspektivische Darstellung der Einrichtung zur Aufspaltung der durch ein inneres Element des Einspritzelementes ausgestoßenen Treibstoffkomponente,
- Fig. 4: einen Querschnitt durch eine erfindungsgemäße Einrichtung zur Aufspaltung der Treibstoffkomponente, und
- Fig. 5: ein aus dem Stand der Technik bekanntes Einspritzelement.

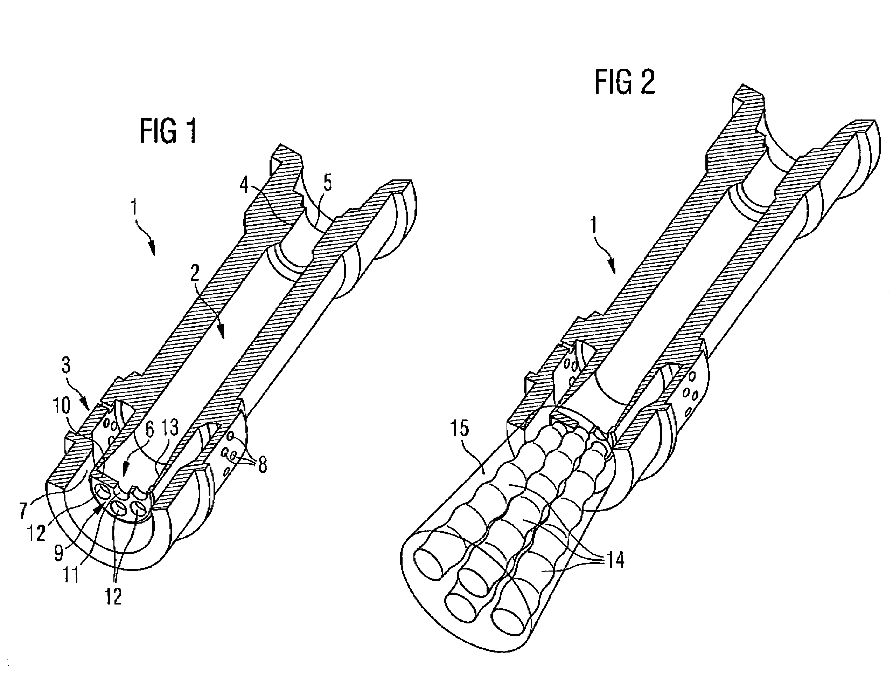

Fig.1 zeigt ein erfindungsgemäßes kryogenes Einspritzelement 1 in einer perspektivischen geschnittenen Darstellung. Das Einspritzelement 1 weist im Wesentlichen das für kryogene Treibstoffe bekannte Aufbauprinzip von Koaxialelementen auf. Die Zuführung des flüssigen Sauerstoffs in den Brennraum (nicht dargestellt) erfolgt über ein zentrales inneres Element 2 mit einer ersten Auslassöffnung 6, während die Zuführung des Wasserstoffs zum Brennraum über ein äußeres Element 3 erfolgt, welches das innere Element 2 koaxial umgibt. Dadurch wird eine zweite Auslassöffnung 7 in Form eines Ringspalts bereitgestellt.

Das innere Element 2 weist eine aus dem Stand der Technik prinzipiell bereits bekannte Blende 4 zur Entkopplung zwischen einem (nicht dargestellten) Fördersystem und der (ebenfalls nicht dargestellten) Brennkammer auf. Die Blende 4 ist in bekannter Weise mit einer ersten Elementeintrittsbohrung 5 versehen. Zur Entkopplung des Fördersystems und der Brennkammer auf der Wasserstoff-Seite weist das äußere Element 3 in ebenfalls bekannter Weise zweite Elementeintrittsbohrungen 8 auf, welche gleichzeitig eine Filterfunktion übernehmen.

Die erste Auslassöffnung 6 ist erfindungsgemäß mit einer Platte 10 versehen, welche in der Fig.1 mit einer zentralen, lediglich beispielhaft kreisförmigen, Bohrung 11 und einer Mehrzahl an weiteren, die zentrale Bohrung 11 auf einer Kreislinie umgebenden Bohrungen 12 versehen ist. Hierdurch ist eine Einrichtung 9 zur Aufspaltung einer Treibstoffkomponente (in diesem Fall Sauerstoff) gebildet. Die weiteren Bohrungen 12 weisen ebenfalls lediglich beispielhaft einen kreisförmigen Querschnitt auf. Durch die mit einer Mehrzahl an Bohrungen 11, 12 versehene Platte 10 wird eine zwangsweise Aufspaltung des Sauerstoffstroms mit Durchströmen der ersten Auslassöffnung 6 bewirkt. Hierdurch wird eine verstärkte Durchmischung der Treibstoffkomponenten erzielt, wodurch auch bei größeren Elementmassendurchsätzen durch das Einspritzelement 1 eine Abnahme des Wirkungsgrad-Niveaus vermieden werden kann. Durch die Aufspaltung des LOX-Medienstroms in einer der Anzahl der Bohrungen 11, 12 entsprechenden Anzahl an "Strahlen" erfolgt eine Vergrößerung der Gesamtoberfläche des Oxidators und damit eine Zunahme der Kontaktoberfläche der Treibstoffkomponenten.

Die Aufspaltung des LOX-Massenstroms an der ersten Auslassöffnung 6 kann besser aus Fig.2 ersehen werden. In dieser sind die durch die Einrichtung 9 zur Aufspaltung des LOX-Massenstroms entstehenden Medienströme mit dem Bezugszeichen 14 gekennzeichnet, während der durch die zweite Auslassöffnung in Form des Ringspalts 7 austretenden Medienstrom mit dem Bezugszeichen 15 versehen ist.

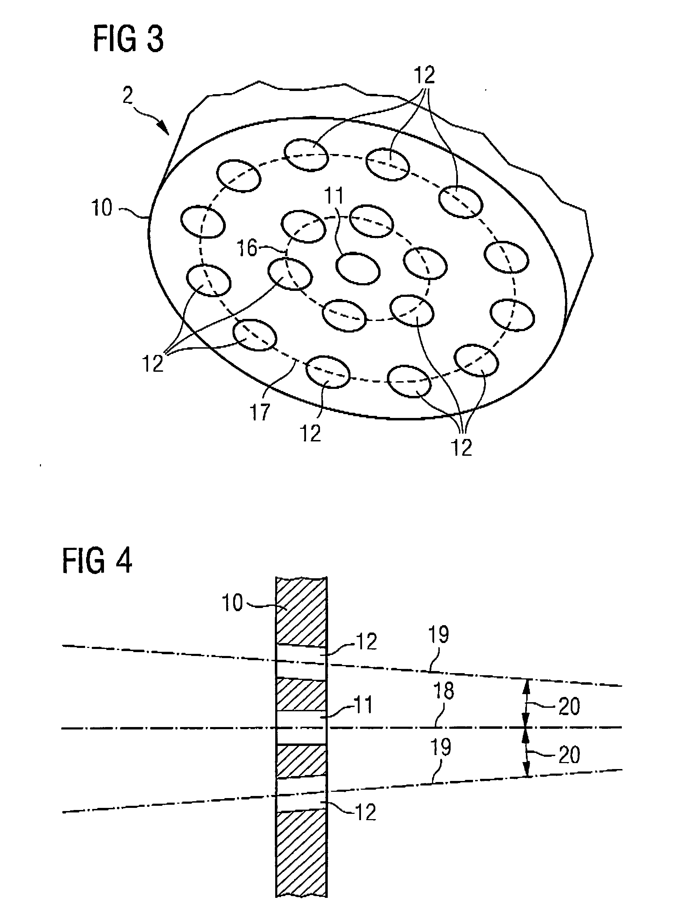

Fig.3 zeigt in einer vergrößerten perspektivischen Darstellung ein weiteres Ausführungsbeispiel der in Fig.1 dargestellten Platte 10. Diese weist beispielhaft auf einem inneren Kreisring 16 und einem äußeren Kreisring 17 jeweils eine Mehrzahl an weiteren Bohrungen 12 auf, die die zentral angeordnete Bohrung 11 umgeben. Die Kreisringe 16, 17 sind dabei konzentrisch zu der zentral angeordneten Bohrung 11 angeordnet.

Entgegen der zeichnerischen Darstellung ist es ebenfalls nicht notwendig, dass die weiteren Bohrungen 12 auf Kreisringen angeordnet sind. Vielmehr kann die Anordnung der weiteren Bohrungen 12 sowie der zentral angeordneten Bohrung 11 beliebig über die Grundfläche der Platte 10 erfolgen, wenn die gewünschte Wirkung der Aufspaltung des Massenstroms erzielt wird.

Eine Verbesserung des Mischungsprozesses der Treibstoffkomponenten ergibt sich durch eine zusätzliche Neigung zumindest mancher der weiteren Bohrungen 12 in Bezug auf die Achse des Einspritzelementes, welche mit der Achse der Zentralbohrung 11 übereinstimmt. Die Neigung der weiteren Bohrungen 12, die z.B. auf der inneren Kreislinie 16 der Platte 10 aus Fig.3 angeordnet sind, kann dabei nach außen, wie dies aus Fig.4 gut ersichtlich ist, in Bezug auf die Achse 18 des inneren Elements erfolgen. Die Achsen der weiteren Bohrungen 12 sind mit dem Bezugszeichen 19 versehen und schließen mit der Achse 18 lediglich zum Zwecke der Illustration jeweils einen gleichen Winkel 20 ein. Zusätzlich oder alternativ kann vorgesehen sein, dass die Achsen 19 der weiteren Bohrungen 12 in Umfangsrichtung (d.h. in die Blattebene hinein oder aus dieser heraus) geneigt angeordnet sind, wodurch sich ein Drall des in die Brennkammer eingespritzten Mediums erzeugen lässt. Das Vorsehen einer Neigung in Bezug auf die Achse des inneren Elements 18 und/oder in Umfangsrichtung einer der Kreislinien 16, 17 erlaubt bei Beibehaltung des einfachen Konstruktionsprinzips von koaxialen Einspritzelementen und gleichzeitiger Erhöhung des Elementdurchsatzes die Erzielung eines hohen Wirkungsgradniveaus.

Durch die Variation der Anzahl der Bohrungen, deren Neigung gegenüber der Achse des inneren Elements und/oder in Umfangsrichtung, insbesondere auf der äußersten Kreislinie 17, kann zusätzlich das Mischungsschwankungsverhältnis beeinflusst werden.

Das erfindungsgemäße Einspritzelement eignet sich insbesondere für die Verwendung kryogener Treibstoffe (Sauerstoff und Wasserstoff). Bei gleichzeitiger Beibehaltung des koaxialen Einspritzprinzips kann eine erhöhte, intensivierte Durchmischung der Treibstoffkomponenten bewirkt werden. Gleichzeitig wird eine vergrößerte Kontaktoberfläche der Treibstoffkomponenten geschaffen, wodurch ein hoher Wirkungsgrad gewährleistet ist. Der Grad der Durchmischung sowie das Maß der vergrößerten Kontaktoberfläche kann durch Variation der Anzahl und der Größe der Bohrungen in der Platte in der ersten Auslassöffnung beeinflusst werden. Weitere Faktoren zur Beeinflussung dieser Parameter ist die Möglichkeit der Neigung der Bohrungen in Bezug auf die Achse des inneren Elements und der Bohrungen auf unterschiedlichen Kreislinien zueinander. Im Ergebnis werden dadurch multiple Sauerstoffstrahlen an der Auslassöffnung des zentral angeordneten inneren Elements ausgebildet. Dadurch ist eine wesentliche Steigerung des elementspezifischen Massendurchsatzes möglich.

### Bezugszeichenliste

- 1: Einspritzelement
- 2: inneres Element
- 3: äußeres Element
- 4: Blende
- 5: erste Elementeintrittsbohrung
- 6: erste Auslassöffnung
- 7: zweite Auslassöffnung in Form eines Ringspalts
- 8: zweite Elementeintrittsbohrung
- 9: Einrichtung zur Aufspaltung in zumindest zwei Medienströme
- 10: Platte
- 11: zentrale Bohrung
- 12: weitere Bohrung
- 13: der ersten Auslassöffnung zugewandtes Ende des inneren Elements
- 14: Medienstrom
- 15: Medienstrom
- 16: Kreislinie
- 17: Kreislinie
- 18: Achse des inneren Elements
- 19: Achse der weiteren Bohrung 12
- 20: Winkel zwischen Achse 18 des inneren Elements und Achse 19 der weiteren Bohrung

## Patentansprüche

1. Einspritzelement (1), insbesondere für einen Raketenantrieb, mit einem kreisförmigen inneren Element (2) mit einer ersten Auslassöffnung und einem koaxial dazu angeordneten äußeren Element (3) mit mindestens einer zur ersten Auslassöffnung koaxial angeordneten zweiten Auslassöffnung zum Aufnehmen und Einspritzen von Treibstoff in einen Brennraum, wobei die erste Auslassöffnung des inneren Elements (2) mit einer Einrichtung (9) zur Aufspaltung einer Treibstoffkomponente in zumindest zwei Medienströme versehen ist, wobei die Einrichtung (9) zur Aufspaltung des durch die erste Auslassöffnung strömenden Mediums durch eine die erste Auslassöffnung (6) verschließende Platte (10) mit zumindest zwei Bohrungen (11,12) gebildet ist und die Platte (10) eine zentral angeordnete Bohrung (11) aufweist, die von einer Mehrzahl an weiteren Bohrungen (12) in der Platte (10) umgeben ist, welche auf zumindest einer konzentrisch zu der zentral angeordneten Bohrung (11) vorgesehenen Kreislinie liegen, **dadurch gekennzeichnet, dass** die Achsen zumindest mancher der weiteren Bohrungen (12) in Umfangsrichtung geneigt angeordnet sind.

2. Einspritzelement nach Anspruch 1, **dadurch gekennzeichnet, dass** die Achsen zumindest mancher der weiteren Bohrungen (12) in Bezug auf die Achse des inneren Elements (2) geneigt sind.

3. Einspritzelement nach Anspruch 2, **dadurch gekennzeichnet, dass** die Achsen zumindest mancher der weiteren Bohrungen (12) in Bezug auf die Achse des inneren Elements (2) in Strömungsrichtung eines Betriebsmittels nach außen geneigt sind.

4. Einspritzelement nach einem der vorherigen Ansprüche, **dadurch gekennzeichnet, dass** die Mehrzahl an weiteren Bohrungen (12) auf einer konzentrisch zu der zentralen Bohrung (11) liegenden Kreislinie angeordnet sind.

5. Einspritzelement nach Anspruch 4, **dadurch gekennzeichnet, dass** die Achsen der weiteren Bohrungen (12) auf einer gemeinsamen Kreislinie in Bezug auf die Achse des inneren Elements (2) den gleichen Winkel aufweisen.

6. Einspritzelement nach Anspruch 4 oder 5, **dadurch gekennzeichnet, dass** die Achsen der weiteren Bohrungen (12) auf unterschiedlichen Kreislinien in Bezug auf die Achse des inneren Elements (2) einen unterschiedlichen Winkel aufweisen.

7. Einspritzelement nach einem der Ansprüche 4 bis 6, **dadurch gekennzeichnet, dass** der Winkel der Achsen der weiteren Bohrungen (12) in Bezug auf die Achse des inneren Elements (2) mit zunehmenden Radius der Kreislinien zunimmt.

8. Einspritzelement nach einem der vorherigen Ansprüche, **dadurch gekennzeichnet, dass** das innere Element (2) an dem der Einrichtung (9) zur Aufspaltung des durch die erste Auslassöffnung (6) strömenden Mediums zugewandten Ende (13) kegelstumpfförmig ausgebildet ist.

9. Einspritzelement nach Anspruch 8, **dadurch gekennzeichnet, dass** sich das innere Element (2) in Richtung der ersten Auslassöffnung (6) erweitert.

10. Verwendung eines Einspritzelements (1) nach einem der vorherigen Ansprüche in einem Raketentriebwert, das einen Brennraum aufweist.

## Claims

1. Injection element (1), in particular for rocket propulsion, having a circular inner element (2) with a first output opening and having an outer element (3), which is arranged coaxially with respect thereto and has at least one second outlet opening, which is arranged coaxially with respect to the first outlet opening, for accommodating and injecting fuel into a combustion chamber, with the first outlet opening of the inner element (2) being provided with a device (9) for splitting a fuel component into at least two media flows, with the device (9) for splitting the medium flowing through the first outlet opening being formed by a plate (10) which closes the first outlet opening (6) and has at least two holes (11, 12), and with the plate (10) having a centrally arranged hole (11) which is surrounded by a plurality of further holes (12) in the plate (10), which further holes (12) lie on at least one circular line which is provided concentrically with respect to the centrally arranged hole (11), **characterized in that** the axes of at least some of the further holes (12) are arranged inclined in the circumferential direction.

2. Injection element according to Claim 1, **characterized in that** the axes of at least some of the further holes (12) are inclined with respect to the axis of the inner element (2).

3. Injection element according to Claim 2, **characterized in that** the axes of at least some of the further holes (12) are inclined outwards with respect to the axis of the inner element (2) in the flow direction of a fuel.

4. Injection element according to one of the preceding claims, **characterized in that** the plurality of further holes (12) are arranged on a circular line which is located concentrically with respect to the central hole (11).

5. Injection element according to Claim 4, **characterized in that** the axes of the further holes (12) have the same angle on a common circular line with reference to the axis of the inner element (2).

6. Injection element according to Claim 4 or 5, **characterized in that** the axes of the further holes (12) have a different angle on different circular lines with respect to the axis of the inner element (2).

7. Injection element according to one of Claims 4 to 6, **characterized in that** the angle of the axes of the further holes (12) with respect to the axis of the inner element (2) increases as the radius of the circular lines increases.

8. Injection element according to one of the preceding claims, **characterized in that** the inner element (2) is formed in a truncated conical shape at the end (13) which faces the device (9) for splitting the medium flowing through the first outlet opening (6).

9. Injection element according to Claim 8, **characterized in that** the inner element (2) widens in the direction of the first outlet opening (6).

10. Use of an injection element (1) according to one of the preceding claims in a rocket motor which has a combustion chamber.

## Revendications

1. Injecteur (1), en particulier pour un moteur de fusée, comprenant un élément interne de forme circulaire (2) avec une première ouverture de sortie et un élément extérieur (3) disposé coaxialement avec lui, avec au moins une deuxième ouverture de sortie disposée coaxialement à la première ouverture de sortie, pour recevoir et injecter du carburant dans une chambre de combustion, la première ouverture de sortie de l'élément interne (2) étant pourvue d'un dispositif (9) pour diviser une composante du carburant en au moins deux flux de fluide, le dispositif (9) pour diviser le fluide s'écoulant à travers la première ouverture de sortie étant formé par une plaque (10) fermant la première ouverture de sortie (6) et comprenant au moins deux alésages (11, 12), et la plaque (10) présentant un alésage (11) disposé centralement qui est entouré par une pluralité d'autres alésages (12) dans la plaque (10), lesquels se situent sur au moins un cercle concentrique à l'alésage (11) disposé centralement, **caractérisé en ce que** les axes d'au moins certains des autres alésages (12) sont inclinés dans la direction périphérique.

2. Injecteur selon la revendication 1, **caractérisé en ce que** les axes d'au moins certains des autres alésages (12) sont inclinés par rapport à l'axe de l'élément interne (2).

3. Injecteur selon la revendication 2, **caractérisé en ce que** les axes d'au moins certains des autres alésages (12) sont inclinés vers l'extérieur par rapport à l'axe de l'élément interne (2) dans la direction d'écoulement d'un fluide de travail.

4. Injecteur selon l'une quelconque des revendications précédentes, **caractérisé en ce que** la pluralité d'autres alésages (12) est disposée sur un cercle concentrique à l'alésage central (11).

5. Injecteur selon la revendication 4, **caractérisé en ce que** les axes des autres alésages (12) sur un cercle commun présentent le même angle par rapport à l'axe de l'élément interne (2).

6. Injecteur selon la revendication 4 ou 5, **caractérisé en ce que** les axes des autres alésages (12) sur des cercles différents présentent un angle différent par rapport à l'axe de l'élément interne (2).

7. Injecteur selon l'une quelconque des revendications 4 à 6, **caractérisé en ce que** l'angle des axes des autres alésages (12) augmente par rapport à l'axe de l'élément interne (2) avec un rayon croissant des cercles.

8. Injecteur selon l'une quelconque des revendications précédentes, **caractérisé en ce que** l'élément interne (2) est réalisé sous forme tronconique à l'extrémité (13) tournée vers le dispositif (9) pour séparer le fluide s'écoulant à travers la première ouverture de sortie (6).

9. Injecteur selon la revendication 8, **caractérisé en ce que** l'élément interne (2) s'élargit dans la direction de la première ouverture de sortie (6).

10. Utilisation d'un injecteur (1) selon l'une quelconque des revendications précédentes, dans un moteur-fusée qui présente une chambre de combustion.
